# EUROPEAN PATENT APPLICATION

(11) **EP 4 096 248 A1**
(43) Date of publication of application: **30.11.2022**
(21) Application number: 22166684.5
(22) Date of filing: 05.04.2022
(51) Int. Cl.: H04W 4/02, H04W 4/80, H04W 12/06

(54) **COMMUNICATION DEVICE, NON-TRANSITORY COMPUTER READABLE STORAGE MEDIUM, AND SYSTEM**

(30) Priority: 24.05.2021 JP 2021087004
(71) Applicant: Kabushiki Kaisha Tokai Rika Denki Seisakusho, Aichi 480-0195 (JP)
(72) Inventor: OHASHI, Yosuke, Niwa-gun, 480-0195 (JP)
(74) Representative: TBK

(57) **Abstract**

There is provided a communication device comprising a communication control section configured to control wireless communication with another communication device that is different from the communication device, in conformity with a designated communication standard, wherein, in a case where a trigger signal received from the other communication device includes unique information that is necessary to identify a mobile object, the communication control section starts a process of estimating a positional relation between the communication device and the other communication device by using a wireless signal communicated between the communication device and the other communication device in conformity with the designated communication standard.

## Description

### CROSS REFERENCE TO RELATED APPLICATION(S)

This application is based upon and claims benefit of priority from Japanese Patent Application No. 2021-087004, filed on May 24, 2021, the entire contents of which are incorporated herein by reference.

### BACKGROUND

The present invention relates to a communication device, a non-transitory computer readable storage medium, and a system.

In recent years, technologies of performing a process on the basis of wireless signals transmitted and received between devices have been developed. For example, JP 2020-118030A discloses a technology of estimating (ranging) a distance between devices by using ultra-wideband (UWB) signals.

### SUMMARY

Sometimes the above-described ranging between devices may be started when a trigger signal is transmitted from one device and received by the other device. However, there is a possibility that a series of processes including the ranging is not completed normally if the ranging is triggered by a trigger signal transmitted from a device that is different from a valid communication partner.

Accordingly, the present invention is made in view of the aforementioned issue, and an object of the present invention is to accurately determine whether or not a transmission source of the trigger signal is the valid communication partner.

To solve the above described problem, according to an aspect of the present invention, there is provided a communication device comprising a communication control section configured to control wireless communication with another communication device that is different from the communication device, in conformity with a designated communication standard, wherein, in a case where a trigger signal received from the other communication device includes unique information that is necessary to identify a mobile object, the communication control section starts a process of estimating a positional relation between the communication device and the other communication device by using a wireless signal communicated between the communication device and the other communication device in conformity with the designated communication standard.

To solve the above described problem, according to another aspect of the present invention, there is provided a non-transitory computer readable storage medium having a program stored therein, the program causing a computer to achieve a communication control function of controlling wireless communication between a communication device and another communication device in conformity with a designated communication standard, wherein, in a case where a trigger signal received from the other communication device includes unique information that is necessary to identify a mobile object, the communication control function starts a process of estimating a positional relation between the communication device and the other communication device by using a wireless signal communicated between the communication device and the other communication device in conformity with the designated communication standard.

To solve the above described problem, according to another aspect of the present invention, there is provided a system comprising: a communication device configured to be installed in a mobile object; and a communication device configured to be installed in a portable device, wherein the communication device configured to be installed in the mobile object includes a communication control section configured to control wireless communication with the communication device configured to be installed in the portable device in conformity with a designated communication standard, and in a case where a trigger signal received from the communication device configured to be installed in the portable device includes unique information that is necessary to identify the mobile object, the communication control section starts a process of estimating a positional relation between the communication device configured to be installed in the mobile object and the communication device configured to be installed in the portable device by using a wireless signal communicated between the communication device configured to be installed in the mobile object and the communication device configured to be installed in the portable device in conformity with the designated communication standard.

To solve the above described problem, according to another aspect of the present invention, there is provided a communication device comprising a communication control section configured to control wireless communication with another communication device that is different from the communication device, in conformity with a designated communication standard, wherein, in a case where a trigger signal received from the other communication device includes no unique information that is necessary to identify a mobile object, the communication control section does not start a subsequent process to be triggered by the reception of the trigger signal but maintains a reception standby state for receiving another trigger signal.

To solve the above described problem, according to another aspect of the present invention, there is provided a non-transitory computer readable storage medium having a program stored therein, the program causing a computer to achieve a communication control function of controlling wireless communication between a communication device and another communication device in conformity with a designated communication standard, wherein, in a case where a trigger signal received from the other communication device includes no unique information that is necessary to identify a mobile object, the communication control function performs control in such a manner that a subsequent process to be triggered by the reception of the trigger signal is not started but a reception standby state for receiving another trigger signal is maintained.

To solve the above described problem, according to another aspect of the present invention, there is provided a system comprising: a communication device configured to be installed in a mobile object; and a communication device configured to be installed in a portable device, wherein the communication device configured to be installed in the mobile object includes a communication control section configured to control wireless communication with the communication device configured to be installed in the portable device in conformity with a designated communication standard, and in a case where a trigger signal received from the communication device configured to be installed in the portable device includes no unique information that is necessary to identify a mobile object, the communication control section does not start a subsequent process to be triggered by the reception of the trigger signal but maintains a reception standby state for receiving another trigger signal.

As described above, according to the present invention, it is possible to accurately determine whether or not a transmission source of a trigger signal is a valid communication partner.

### BRIEF DESCRIPTION OF THE DRAWINGS

FIG. 1 is a block diagram illustrating a configuration example of a system 1 according to an embodiment of the present invention.
FIG. 2 is a flowchart illustrating an example of controlling start of a process of estimating a positional relation by a second communication device 220 according to the embodiment.
FIG. 3 is a sequence diagram illustrating an example of a flow of overall operation of the system 1 according to the embodiment.

### DETAILED DESCRIPTION OF THE EMBODIMENT(S)

Hereinafter, referring to the appended drawings, preferred embodiments of the present invention will be described in detail. It should be noted that, in this specification and the appended drawings, structural elements that have substantially the same function and structure are denoted with the same reference numerals, and repeated explanation thereof is omitted.

### <1. Embodiment

### <<1.1. System Configuration Example»

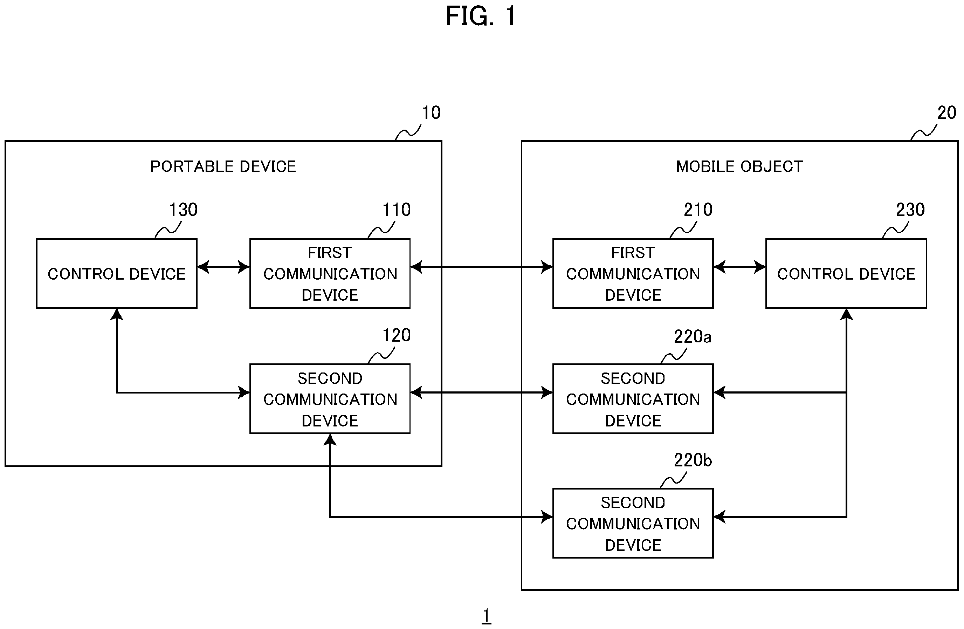

First, a configuration example of a system 1 according to an embodiment of the present invention will be described. FIG. 1 is a block diagram illustrating the configuration example of the system 1 according to the embodiment of the present invention.

As illustrated in FIG. 1, the system 1 according to the present embodiment may include a portable device 10 and a mobile object 20.

### (Portable Device 10)

The portable device 10 according to the present embodiment is carried by a user of the mobile object 20 (such as an owner of the mobile object 20 or a person who has permission from the owner to use the mobile object 20).

As illustrated in FIG. 1, the portable device 10 according to the present embodiment may include a first communication device 110, a second communication device 120, and a control device 130.

### (First Communication Device 110)

The first communication device 110 according to the present embodiment performs wireless communication with the first communication device 210 installed in the mobile object 20 in conformity with a first communication standard (sometimes referred to as another communication standard in the present disclosure).

Therefore, the first wireless communication device 110 according to the present embodiment includes an antenna for transmitting/receiving wireless signals in conformity with the first communication standard.

For example, in the case of the first communication standard according to the present embodiment, low frequency (LF) band wireless signals and ultra high frequency (UHF) band wireless signals may be used.

In addition, for example, Bluetooth Low Energy (BLE) (registered trademark) and the like may be adopted as the first communication standard according to the present embodiment.

The first wireless communication device 110 according to the present embodiment may include a communication control section configured to control transmission/reception of wireless signals in conformity with the first communication standard.

Various kinds of processors achieve a communication control function of the communication control section.

### (Second Communication Device 120)

The first communication device 120 according to the present embodiment performs wireless communication with the second communication device 220 installed in the mobile object 20 in conformity with a second communication standard (sometimes simply referred to as designated communication standard in the present disclosure) that is different from the first communication standard.

Therefore, the second wireless communication device 120 according to the present embodiment includes an antenna for transmitting/receiving wireless signals in conformity with the second communication standard.

For example, ultra-wideband wireless communication may be adopted as the second communication standard according to the present embodiment.

On the other hand, the second communication standard according to the present embodiment is not limited to the ultra-wideband wireless communication. Various kinds of communication standards for transmitting/receiving wireless signals that are useful for estimating a positional relation between the communication devices may be adopted as the second communication standard according to the present embodiment.

The second wireless communication device 120 according to the present embodiment may include a communication control section configured to control transmission/reception of wireless signals in conformity with the second communication standard.

For example, the communication control section of the second communication device 120 controls a process of estimating a positional relation between the second communication device 120 and the second communication device 220.

Examples of the process of estimating the positional relation include ranging for estimating a distance between the second communication device 120 and the second communication device 220.

In addition, for example, the process of estimating the positional relation may include estimation of an angle of one of the second communication device 120 and the second communication device 220 with respect to the other of the second communication device 120 and the second communication device 220.

Various kinds of processors achieve a communication control function of the communication control section of the second communication device 120.

### (Control Device 130)

The control device 130 according to the present embodiment controls various structural elements included in the portable device 10.

For example, the control device 130 according to the present embodiment may control a timing of staring wireless communication by the first communication device 110 in conformity with the first communication standard, a timing of staring wireless communication by the second communication device 120 in conformity with the first communication standard, and the like.

Various kinds of processors achieve the above-described control function of the control device 130.

### (Mobile Object 20)

For example, the mobile object 20 according to the present embodiment may be various kinds of movable devices such as a vehicle, a ship, or an airplane.

As illustrated in FIG. 1, the mobile object 20 according to the present embodiment may include a first communication device 210, a second communication device 220, and a control device 230.

### (First Communication Device 210)

The first communication device 210 according to the present embodiment performs wireless communication with the first communication device 110 installed in the portable device 10 in conformity with the first communication standard.

Therefore, the first wireless communication device 210 according to the present embodiment includes an antenna for transmitting/receiving wireless signals in conformity with the first communication standard.

The first wireless communication device 210 according to the present embodiment may include a communication control section configured to control transmission/reception of wireless signals in conformity with the first communication standard.

Various kinds of processors achieve a communication control function of the communication control section.

### (Second Communication Device 220)

The second communication device 220 according to the present embodiment performs wireless communication with the second communication device 120 installed in the portable device 10 in conformity with the second communication standard.

Therefore, the second wireless communication device 220 according to the present embodiment includes an antenna for transmitting/receiving wireless signals in conformity with the second communication standard.

In addition, the second wireless communication device 220 according to the present embodiment may include a communication control section configured to control transmission/reception of wireless signals in conformity with the second communication standard.

For example, the communication control section of the second communication device 220 controls a process of estimating a positional relation between the second communication device 120 and the second communication device 220.

Various kinds of processors achieve a communication control function of the communication control section of the second communication device 220. Details of the communication control function will be described later.

Note that, the single mobile object 20 may include a plurality of the second communication devices 220 according to the present embodiment.

For example, in the case of the example illustrated in FIG. 1, the mobile object 20 includes two second communication devices 220a and 220b.

In the case where the single mobile object 20 includes the plurality of second communication devices 220, each of the second communication devices 220 may executes the process of estimating the positional relation with the second communication device 120 of the portable device 10.

### (Control Device 230)

The control device 230 according to the present embodiment controls various structural elements included in the mobile object 20.

In addition, the control device 230 according to the present embodiment authenticates the portable device 10 on the basis of the wireless communication between the portable device 10 and the mobile object 20.

In addition, the control device 230 according to the present embodiment may control operation of various kinds of control target devices (not illustrated) included in the mobile object 20 on the basis of a result of the authentication and a result of the process of estimating the positional relation by using the wireless signals in conformity with the second communication standard.

For example, the control device 230 according to the present embodiment may cause the control target device to perform a designated operation in the case where authenticity of the portable device 10 is confirmed through the authentication and the result of the process of estimating the positional relation satisfies a designated condition.

Examples of the control target device according to the present embodiment include an engine, a lock device, and the like. The lock device is configured to perform control over unlocking/locking of a door of the mobile object 20.

For example, the control device 230 may cause the lock device to unlock the door in the case where authenticity of the portable device 10 is confirmed through the authentication and the result of the process of estimating the positional relation satisfies a designated condition.

In addition, for example, the control device 230 may permit the engine to start in the case where authenticity of the portable device 10 is confirmed through the authentication and the result of the process of estimating the positional relation satisfies a designated condition.

Various kinds of processors achieve the above-described control functions of the control device 230 according to the present embodiment.

The configuration example of the system 1 according to the present embodiment has been described above. Note that, the configuration described above with reference to FIG. 1 is a mere example. The configuration of the system 1 according to the present embodiment is not limited thereto. The configuration of the system 1 according to the present embodiment may be flexibly modified in accordance with specifications and operations.

### <<1.2. Details of Control>>

Next, details of various kinds of control by the system 1 according to the present embodiment will be described.

As described above, the system 1 according to the present embodiment performs the process of estimating a positional relation between the second communication device 120 of the portable device 10 and the second communication device 220 of the mobile object 20.

For example, the estimation of the positional relation may be triggered when the second communication device 220 of the mobile object 20 receives a trigger signal transmitted from the second communication device 120 of the portable device 10.

However, at this time, there is a possibility that a series of processes including the estimation process is not completed normally if the process of estimating the positional relation is triggered by reception of a trigger signal transmitted from a device that is different from a valid communication partner.

In addition, in the case where the process of estimating the positional relation is triggered by the reception of the trigger signal transmitted from the device that is different from the valid communication partner, unnecessary reception standby time is spent and an unnecessary signal is transmitted. Therefore, electric power consumption and processing time increase.

To avoid such situations, it is important to determine whether or not a transmitter of the trigger signal is a valid communication partner, and decide whether or not to start the process of estimating a positional relation on the basis of a result of the determination.

Accordingly, one of features of the second communication device 220 of the mobile object 20 is to determine whether or not the received trigger signal includes unique information that is necessary to identify the mobile object 20 and determine whether or not to start the process of estimating the positional relation on the basis of a result of the determination.

More specifically, the second communication device 220 according to the present embodiment may start the process of estimating a positional relation in the case where the received trigger signal includes the unique information that is necessary to identify the mobile object 20.

On the other hand, in the case where the received trigger signal includes no unique information, the second communication device 220 according to the present embodiment does not start a subsequent process to be triggered by the reception of the trigger signal (that is, the process of estimating the positional relation) but maintains a reception standby state for receiving a trigger signal.

Under the above-described control by the second communication device 220 according to the present embodiment, it is possible to prevent an unnecessary process based on the trigger signal transmitted from the device that is different from the valid partner, and it is possible to avoid occurrence of an error in the series of processes and unnecessary electric power consumption.

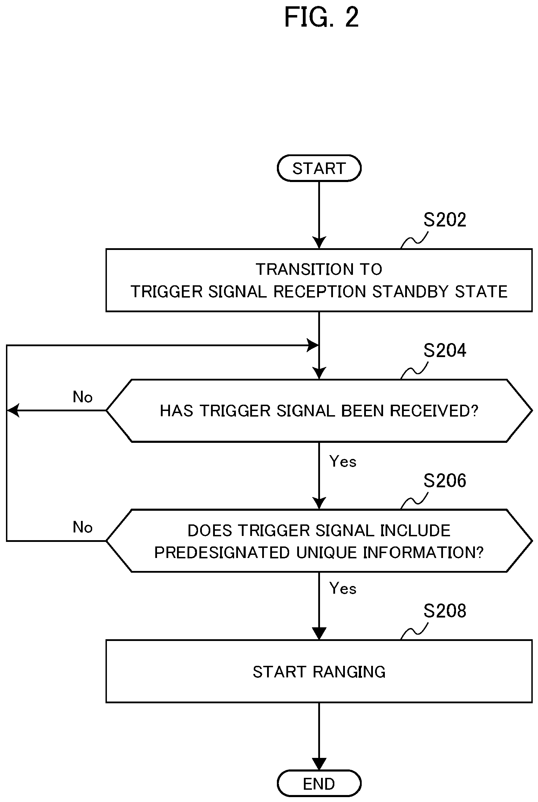

Next, details of control over start of the process of estimating the positional relation by the second communication device 220 according to the present embodiment will be described with reference to FIG. 2.

FIG. 2 is a flowchart illustrating an example of controlling start of the process of estimating a positional relation by the second communication device 220 according to the present embodiment.

Note that, FIG. 2 exemplifies a flow of the case where the second communication device 120 and the second communication device 220 perform ranging in the process of estimating the positional relation.

In the case of the example illustrated in FIG. 2, the second communication device 220 of the mobile object 20 first transitions to the reception standby state for receiving a trigger signal (Step S202).

Note that, the trigger signal according to the present embodiment may be a signal to be used for requesting the second communication device to start the process of estimating a positional relation.

Next, the second communication device 220 determines whether or not the trigger signal has been received (Step S204).

In the case where it is determined that the trigger signal has not been received (No in Step S204), the second communication device 220 returns to Step S204 and makes a determination again.

On the other hand, in the case where it is determined that the trigger signal has been received (Yes in Step S204), the second communication device 220 determines whether or not the trigger signal includes unique information that is necessary to identify the mobile object 20 (Step S206).

Here, the unique information may be information that is designated in advance for each mobile object 20.

The unique information is shared in advance between the second communication device 220 of the mobile object 20 and the second communication device 120 of the portable device 10 paired with the mobile object 20.

A method of sharing the unique information according to the present embodiment will be described later.

In the case where it is determined that the received trigger signal does not include the unique information that is necessary to identify the mobile object 20 (No in Step S206), the second communication device 220 returns to Step S204 and performs the subsequent process again.

In other words, in the case where it is determined that the received trigger signal does not include the unique information that is necessary to identify the mobile object 20 (No in Step S206), the second communication device 220 according to the present embodiment maintains the reception standby state for receiving a trigger signal.

Such control makes it possible to avoid a situation where the unnecessary estimation process is triggered by reception of a trigger signal transmitted from a device without the designated unique information.

On the other hand, in the case where it is determined that the received trigger signal includes the predesignated unique information (Yes in Step S206), the second communication device 220 starts ranging in the process of estimating the positional relation (Step S208).

Such a control makes it possible to accurately executes the series of processes including the ranging triggered by the trigger signal transmitted from the valid communication partner with which the designated unique information is shared.

Note that, settings for the control to be performed by the second communication device 220 to start the ranging are configured depending on an adopted sequence of the ranging.

The ranging between the second communication device 120 and the second communication device 220 includes transmission/reception of a plurality of ranging signals and calculation of a ranging value (estimated value of distance) on the basis of the transmission/reception of the plurality of ranging signals.

For example, the second communication device 220 may calculate the ranging value on the basis of a first ranging signal transmitted from the second communication device 120 and a second ranging signal transmitted from the second communication device 220 in response to the first ranging signal.

In this case, it is possible for the second communication device 220 to calculate the ranging value on the basis of a time period ΔT1 and a time period ΔT2. The time period ΔT1 is time from when the second communication device 120 transmits the first ranging signal to when the second communication device 120 receives the second ranging signal. The time period ΔT2 is time from when the second communication device 220 receives the first ranging signal to when the second communication device 220 transmits the second ranging signal.

More specifically, it is possible for the second communication device 220 to calculate time it takes to propagate the first ranging signal and the second ranging signal (that is, time it takes to perform round-trip communication) by subtracting the time period ΔT2 from the time period ΔT1. In addition it is possible for the second communication device 220 to calculate time it takes to propagate the first ranging signal or the second ranging signal (that is, time it takes to perform one-way communication) by dividing the calculated time by 2.

In addition, by multiplying the value obtained through (time period ΔT1 - time period ΔT2)/2 by speed of the signals, it is possible for the second communication device 220 to calculate the ranging value.

In the case of the ranging based on the sequence exemplified above, the second communication device 220 may transition to the reception standby state for receiving the first ranging signal to be used for ranging when the received trigger signal includes the unique information that is necessary to identify the mobile object 20.

On the other hand, a subject that is counter to the subject of the above-described sequence may be used as the subject that transmits the first ranging signal or the second ranging signal. In other words, the second communication device 220 may transmit the first ranging signal, and the second communication device 120 may transmit the second ranging signal in response to the first ranging signal.

In this case, the second communication device 220 may transmit the first ranging signal to be used for ranging when the received trigger signal includes the unique information that is necessary to identify the mobile object 20.

As described above, settings for the control to be performed by the second communication device 220 according to the present embodiment to start the ranging are configured depending on an adopted sequence of the ranging.

Next, an example of a flow of overall operation of the system 1 including the sharing of the unique information according to the present embodiment will be described.

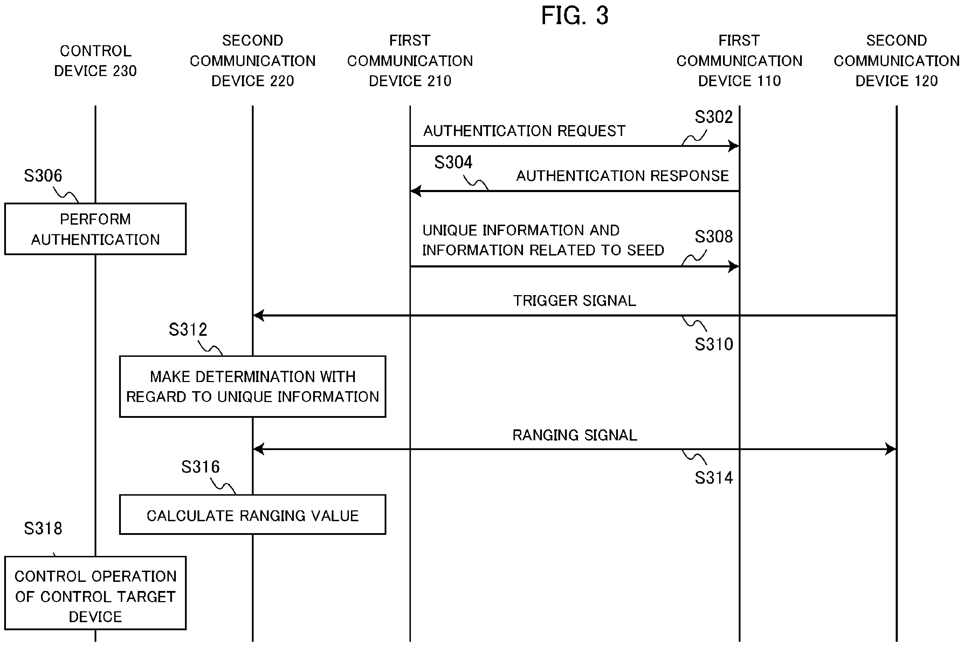

FIG. 3 is a sequence diagram illustrating the example of the flow of the overall operation of the system 1 according to the present embodiment.

In the case of the example illustrated in FIG. 3, the first communication device 110 of the portable device 10 and the first communication device 210 of the mobile object 20 first transmit/receive a wireless signal in conformity with the first communication standard to be used for authenticating the portable device 10.

For example, the first communication device 210 of the mobile object 20 first transmits an authentication request (Step S302). The authentication request is a signal for requesting information that is necessary to authenticate the portable device 10.

The authentication request may be a signal for requesting information to be used for authenticating the portable device 10. More specifically, authentication request may be a signal for requesting information to be used for determining authenticity of the portable device 10.

Examples of the information to be used for determining the authenticity of the portable device 10 include an identifier allocated to the portable device 10, a password, a hash value calculated by using a random number included in the authentication request.

Next, the first communication device 110 of the portable device 10 transmits an authentication response including the above-described information (Step S304) in response to the authentication request received in Step S302.

Next, the control device 230 of the mobile object 20 authenticates the portable device 10 (Step S306) on the basis of the authentication response received by the first communication device 210 in Step S304.

In the case where the authenticity of the portable device 10 is confirmed in Step S306, the control device 230 causes the first communication device 210 to transmit the unique information that is designated in advance for the mobile object 20 and information related to a seed to be used for encrypting a ranging signal in a subsequent ranging step (Step S308).

As described above, the unique information and the information related to the seed according to the present embodiment may be shared through wireless communication in conformity with the first communication standard that is different from the second communication standard related to the ranging.

Next, the second communication device 120 of the portable device 10 transmits a trigger signal (Step S310). The trigger signal includes the unique information that is received by the first communication device 110 in Step S308.

The second communication device 220 of the mobile object 20 determines whether or not the trigger signal received in Step S310 includes unique information that is necessary to identify the mobile object 20 (Step S312).

In the case where it is determined that the trigger signal received in Step S312 includes the unique information that is necessary to identify the mobile object 20, the second communication device 220 of the mobile object 20 starts ranging and a plurality of ranging signals are transmitted and received between the second communication device 120 and the second communication device 220 (Step S314).

At this time, the second communication device 120 of the portable device 10 may encrypt the ranging signal to be transmitted on the basis of the information related to the seed, which has been received by the first communication device 110 in Step S308.

On the other hand, it is sufficient for the second communication device 220 of the mobile object 20 to acquire from the control device 230 the information related to the seed transmitted in Step S308, and encrypt the ranging signal to be transmitted on the basis of this information.

The second communication device 220 of the mobile object 20 calculates a ranging value (Step S316) on the basis of the plurality of ranging signals received in Step S314.

Next, the control device 230 of the mobile object 20 controls operation of the control target device (Step S318) on the basis of a result of the authentication obtained in Step S306 and the ranging value calculated in Step S316.

The example of the flow of overall operation of the system 1 according to the present embodiment has been described above.

Note that, the case where the control device 230 of the mobile object 20 performs authentication on the basis of the wireless signals in conformity with the first communication standard has been exemplified in the above description. However, this is a mere example.

It is also possible for the control device 230 according to the present embodiment to admit the authenticity of the portable device 10 when the trigger signal received by the second communication device 220 includes the unique information that is necessary to identify the mobile object 20.

Alternatively, for example, the control device 230 may also admit the authenticity of the portable device 10 in the case where the ranging is performed between the second communication device 120 and the second communication device 220 more than once and a plurality of seeds that have been shared in advance are used for encrypting the ranging signals in a designated order.

The flow of operation of the system 1 according to the present embodiment may be flexibly modified in accordance with specifications and operations.

### <2. Supplement>

Heretofore, preferred embodiments of the present invention have been described in detail with reference to the appended drawings, but the present invention is not limited thereto. It should be understood by those skilled in the art that various changes and alterations may be made without departing from the spirit and scope of the appended claims.

In addition, the series of processes performed by each of the devices described herein may be achieved by a program stored in a non-transient computer readable storage medium. For example, each program is loaded into RAM, and executed by a processor such as a CPU when a computer executes each of the program. The storage medium may be a magnetic disk, an optical disc, a magneto-optical disc, flash memory, or the like, for example. Alternatively, the above-described programs may be distributed via a network without using the storage medium, for example. There is provided a communication device comprising a communication control section configured to control wireless communication with another communication device that is different from the communication device, in conformity with a designated communication standard, wherein, in a case where a trigger signal received from the other communication device includes unique information that is necessary to identify a mobile object, the communication control section starts a process of estimating a positional relation between the communication device and the other communication device by using a wireless signal communicated between the communication device and the other communication device in conformity with the designated communication standard.

There is provided a communication device comprising a communication control section configured to control wireless communication with another communication device that is different from the communication device, in conformity with a designated communication standard, wherein, in a case where a trigger signal received from the other communication device includes unique information that is necessary to identify a mobile object, the communication control section starts a process of estimating a positional relation between the communication device and the other communication device by using a wireless signal communicated between the communication device and the other communication device in conformity with the designated communication standard.

## Claims

1. A communication device comprising
a communication control section configured to control wireless communication with another communication device that is different from the communication device, in conformity with a designated communication standard,
wherein, in a case where a trigger signal received from the other communication device includes unique information that is necessary to identify a mobile object, the communication control section starts a process of estimating a positional relation between the communication device and the other communication device by using a wireless signal communicated between the communication device and the other communication device in conformity with the designated communication standard.

2. The communication device according to claim 1,
wherein, in a case where the trigger signal includes the unique information, the communication control section transitions to a reception standby state for receiving an estimation signal to be used for the process of estimating the positional relation.

3. The communication device according to claim 2,
wherein the estimation signal is encrypted by using a seed that is shared in advance between the communication device and the other communication device.

4. The communication device according to any one of claims 1 to 3,
wherein, in the process of estimating the positional relation, the communication control section performs ranging to estimate a distance between the communication device and the other communication device.

5. The communication device according to any one of claims 1 to 4,
wherein the unique information is shared with the other communication device through wireless communication in conformity with another communication standard that is different from the designated communication standard.

6. The communication device according to any one of claims 1 to 5,
wherein the designated communication standard includes ultra-wideband wireless communication.

7. The communication device according to any one of claims 1 to 6,
wherein the communication device is configured to be installed in the mobile obj ect.

8. Anon-transitory computer readable storage medium having a program stored therein, the program causing a computer to achieve
a communication control function of controlling wireless communication between a communication device and another communication device in conformity with a designated communication standard,
wherein, in a case where a trigger signal received from the other communication device includes unique information that is necessary to identify a mobile object, the communication control function starts a process of estimating a positional relation between the communication device and the other communication device by using a wireless signal communicated between the communication device and the other communication device in conformity with the designated communication standard.

9. A system comprising:
a communication device configured to be installed in a mobile object; and
a communication device configured to be installed in a portable device,
wherein the communication device configured to be installed in the mobile object includes a communication control section configured to control wireless communication with the communication device configured to be installed in the portable device in conformity with a designated communication standard, and
in a case where a trigger signal received from the communication device configured to be installed in the portable device includes unique information that is necessary to identify the mobile object, the communication control section starts a process of estimating a positional relation between the communication device configured to be installed in the mobile object and the communication device configured to be installed in the portable device by using a wireless signal communicated between the communication device configured to be installed in the mobile object and the communication device configured to be installed in the portable device in conformity with the designated communication standard.

10. A communication device comprising
a communication control section configured to control wireless communication with another communication device that is different from the communication device, in conformity with a designated communication standard,
wherein, in a case where a trigger signal received from the other communication device includes no unique information that is necessary to identify a mobile object, the communication control section does not start a subsequent process to be triggered by the reception of the trigger signal but maintains a reception standby state for receiving another trigger signal.

11. A non-transitory computer readable storage medium having a program stored therein, the program causing a computer to achieve
a communication control function of controlling wireless communication between a communication device and another communication device in conformity with a designated communication standard,
wherein, in a case where a trigger signal received from the other communication device includes no unique information that is necessary to identify a mobile object, the communication control function performs control in such a manner that a subsequent process to be triggered by the reception of the trigger signal is not started but a reception standby state for receiving another trigger signal is maintained.

12. A system comprising:
a communication device configured to be installed in a mobile object; and
a communication device configured to be installed in a portable device,
wherein the communication device configured to be installed in the mobile object includes a communication control section configured to control wireless communication with the communication device configured to be installed in the portable device in conformity with a designated communication standard, and
in a case where a trigger signal received from the communication device configured to be installed in the portable device includes no unique information that is necessary to identify a mobile object, the communication control section does not start a subsequent process to be triggered by the reception of the trigger signal but maintains a reception standby state for receiving another trigger signal.
